# EUROPÄISCHE PATENTANMELDUNG

(11) **EP 2 497 636 A1**
(43) Veröffentlichungstag der Anmeldung: **12.09.2012**
(21) Anmeldenummer: 11002043.5
(22) Anmeldetag: 11.03.2011
(51) Int. Cl.: B32B 27/10

(54) **Verbessertes Verbundsystem für Verpackungen**

(71) Anmelder: Deutsche SiSi-Werke Betriebs GmbH, 69214 Eppelheim/Heidelberg (DE)
(72) Erfinder: Kaisig, Carsten, 68165 Mannheim (DE); Byl, Torsten, 69221 Dossenheim (DE); Schwartz, Erhard, 69168 Wiesloch (DE); Stumpf, Thomas, 69226 Nussloch (DE)
(74) Vertreter: Grünecker, Kinkeldey, Stockmair & Schwanhäusser

(57) **Zusammenfassung**

Die vorliegende Erfindung betrifft ein mehrschichtiges Verbundsystem, geeignet zur Herstellung von Folienverpackungen, beispielsweise für Lebensmittel. Insbesondere geeignet ist das mehrlagige Verbundsystem zur Herstellung von Standbeuteln, geeignet zur Verpackung von flüssigen Lebensmitteln, insbesondere Getränken

## Beschreibung

Die vorliegende Erfindung betrifft ein mehrschichtiges Verbundsystem, geeignet zur Herstellung von Folienverpackungen, beispielsweise für Lebensmittel. Insbesondere geeignet ist das mehrlagige Verbundsystem zur Herstellung von Standbeuteln, geeignet zur Verpackung von flüssigen Lebensmitteln, insbesondere Getränken.

### Stand der Technik

Aus Verbundsystemen zusammengesetzte Lebensmittelverpackungen, insbesondere Standbeutel oder Standbodenbeutel sind bekannt. Typische Verbundsysteme für derartige Standbeutel sind in der Regel kleberkaschiert und/oder extrusionskaschiert bzw. beschichtet, wobei insbesondere metallische Folien als Barriereschichtträger oder als Schicht zur Verbesserung mechanischer Eigenschaften vorliegen. Weitere Schichten derartiger Laminate sind Kunststoffschichten, die je nach Einsatzgebiet unterschiedlich ausgestaltet sein können. Typisch ist hier bislang der Einsatz von Materialien, die auf Erdölbasis hergestellt werden und/oder nicht biologisch abbaubar oder kompostierbar sind

Derartige Verbundsysteme sowie Standbeutel und Herstellungsverfahren für Standbeutel oder andere Verpackungssysteme sind beispielsweise aus dem Stand der Technik EP 2 223 866 A1, WO 2008/037447, oder EP 0 600 502 bekannt. Die dort offenbarten Verbundsysteme sind nicht biologisch abbaubar, so dass daraus hergestellte Verpackungen nur konventionell entsorgt werden können, während eine Entsorgung durch Kompostierung nicht möglich ist. Gleichzeitig setzen diese Verbundsysteme energieaufwändig hergestellte Ausgangsstoffe ein, wie Metallfolien, und verbrauchen darüberhinaus Materialien auf Erdölbasis. Allerdings ist es erwünscht, insbesondere auch im Lebensmittelbereich, auf ökologisch verträgliche Materialien auszuweichen und insbesondere auf den Einsatz von Metallfolien zu verzichten (da diese unter hohem Einsatz an Energie und anderen Ressourcen, wie Wasser, hergestellt werden). Eine Kompostierbarkeit würde darüber hinaus einen einfachen Entsorgungsweg eröffnen, da derartige Laminate und Verpackungen dann einfach über die inzwischen weit verbreiteten Abfallentsorgungssysteme entsprechend weiter verwendet werden können. Der Einsatz von Materialien auf Basis von nachwachsenden Rohstoffen würde darüber hinaus die existierenden Ressourcen an Erdöl nicht belasten und auch einen Beitrag zur Verbesserung der CO2-Bilanz leisten.

### Aufgabe der vorliegenden Erfindung

Die vorliegende Erfindung stellt sich also die Aufgabe ein Verbundsystem anzugeben, insbesondere geeignet zur Herstellung eines Standbeutels, wobei das Verbundsystem die notwendigen Eigenschaften zur Herstellung derartiger Lebensmittelverpackungen aufweist, wie Stabilität, Dichtigkeit gegenüber Flüssigkeiten, Gasdurchtritt etc., wobei weitestgehend ökologisch verträgliche bzw. biologisch abbaubare Materialien Einsatz finden sollen.

### Kurze Beschreibung der Erfindung

Diese Aufgabe wird durch ein Verbundsystem gemäß Anspruch 1 gelöst. Bevorzugte Ausgestaltungen dieses Verbundsystems sind in den Unteransprüchen 2 bis 8 sowie der nachfolgenden Beschreibung angegeben. Weiterhin stellt die vorliegende Erfindung auch eine Lebensmittelverpackung zur Verfügung, umfassend das Verbundsystem gemäß einem der Ansprüche 1 bis 8. Bevorzugt ist diese Lebensmittelverpackung ein Standbeutel.

### Detaillierte Beschreibung der Erfindung

Das Verbundsystem in Übereinstimmung mit der vorliegenden Erfindung weist als wesentlichen Bestandteil eine Schicht aus Papier auf, sowie mindestens eine Barriereschicht, dadurch gekennzeichnet, dass das Verbundsystem keine Metallfolie umfasst.

Weitere Ausgestaltungen des erfindungsgemäßen Verbundsystems und damit verbundene Vorteile sind nachfolgend aufgeführt. Die nachfolgend definierten zusätzlichen Schichten, bevorzugt einzusetzende Schichtmaterialien, Schichtdicken und weitere Ausgestaltungen sind jeweils beliebig miteinander kombinierbar, die nachfolgend angegebenen spezifischen Schichtabfolgen des erfindungsgemäßen Verbundsystems dienen der Beschreibung und Illustrierung der vorliegenden Erfindung, diese ist jedoch nicht auf derartige spezifische Beispiele beschränkt.

### Papierschicht:

Das Verbundsystem in Übereinstimmung mit der vorliegenden Erfindung weist als wesentliche Schicht eine Papierschicht auf. Diese Papierschicht hat in typischer Weise eine Dicke im Bereich von 150 bis 15 µm, bevorzugt 100 bis 25 µm, insbesondere bevorzugt 80 bis 30 µm, wie beispielsweise etwa 35, 45 oder 50 µm. Erfindungsgemäß können beliebige Papierarten verwendet werden einschließlich Papiere mit Füllstoffen, wie Kaolin, Talkum, Titandioxid, Stärke, Calciumcarbonat usw.. Bei dem erfindungsgemäß einzusetzenden Papier kann es sich um ungestrichenes oder gestrichenes Papier handeln, wobei Papiere mit sehr kurzen Fasern bevorzugt sind. Insbesondere bevorzugt sind Transparentpapiere, z.B. Pergaminpapier, ein aus fein gemahlenem Zellstoff hergestelltes Papier.

Die erfindungsgemäße wesentliche Papierschicht liegt typischer Weise relativ weit auf der bei der fertigen Lebensmittelverpackung nach außen gerichteten Seite des Verbundsystems vor und die erfindungsgemäß zu verwendende Papierschicht, insbesondere die bevorzugte Papierschicht aus Pergaminpapier trägt insbesondere zur mechanischen Festigkeit und Steifigkeit des Verbundsystems der vorliegenden Erfindung bei. Die bevorzugte Verwendung von Pergaminpapier führt weiterhin dazu, aufgrund der Transparenz dieses Papiers, dass verschiedene Arten der Bedruckung möglich sind da beispielsweise Konterdruckverfahren möglich sind, bei denen die innen liegende Seite der Pergaminpapierschicht bedruckt ist (das Druckbild scheint dann nach außen durch, so dass insbesondere Beschädigung und Abrieb an der Bedruckung auf der Außenseite der Papierschicht vermieden werden kann). Das Papiermaterial dieser Schicht kann weiterhin mit zusätzlichen Additiven ausgerüstet sein, wie Absorber etc. So kann der Beitrag dieser Schicht zu den Gesamteigenschaften des Verbundsystems optimiert werden.

Darüber hinaus ermöglicht es die Verwendung von Papierschichten einen Beitrag zum Klimaschutz zu leisten, da zur Herstellung des Papiers, auch des Pergaminpapiers nachwachsende Rohstoffe zum Einsatz kommen, so das insgesamt hier eine Verbesserung der CO₂-Bilanz ermöglicht wird.

### Barriereschicht:

Weiterhin weist das Verbundsystem in Übereinstimmung mit der vorliegenden Erfindung mindestens eine Barriereschicht auf. Hier sind, in Abhängigkeit von der gewünschten Ausgestaltung des Verbundsystems verschiedene Optionen möglich, sowohl im Hinblick auf die Art der Barriereschicht, die Position der Barriereschicht im Verbundsystem und auch im Hinblick auf die Anzahl der Barriereschichten. Das Verbundsystem der vorliegenden Erfindung kann eine oder mehrere Barriereschichten aufweisen, wie eine, zwei oder drei Barriereschichten. Diese können sich im Hinblick auf ihre Art und Position im Verbundsystem unterscheiden. Die Barriereschicht kann beispielsweise eine Barrierematerialschicht sein und/oder eine Siegelschicht mit Barriereeigenschaft und/oder eine Lackschicht, wie jeweils nachfolgend beschrieben.

### Barrierematerialschicht:

Die erste Option ist die Vorsehung einer Barrierematerialschicht auf der in der Lebensmittelverpackung innen liegenden Seite der vorstehend beschriebenen Papierschicht. Eine derartige Barrierematerialschicht in Übereinstimmung mit der vorliegenden Erfindung umfasst bevorzugt eine Trägerschicht mit einer vorzugsweise aufgedampften Schicht aus Barrierematerial. Alternativ ist es auch möglich die Schicht aus Barrierematerial als Lack aufzubringen, wie weiter unten beschrieben. Dabei macht die Trägerschicht den Hauptbestandteil der Barriere aus, da die vorzugsweise aufgedampfte Schicht aus Barrierematerial selbst nur wenige Angström stark ist bzw. die alternativ vorgesehene Lackschicht ebenfalls deutlich dünner als die Trägerschicht ist. Die Trägerschicht umfasst als Hauptbestandteil bevorzugt ein Material, das biologisch abbaubar ist und/oder aus nachwachsenden Rohstoffen hergestellt ist. Insbesondere geeignete Materialien als Trägerschicht für die erfindungsgemäß zu verwendende Barrierematerialschicht sind Polymilchsäurematerialien sowie Zellglas. Polymilchsäurematerialien werden bereits für Folienmaterialien und Verpackungen verwendet, beispielweise als Mulchfolie oder für Einkaufsbeutel. Weitere bekannte Anwendungsgebiete von Polymilchsäuren sind Wegwerfbestecke, Strohhalme und Schraubdeckeldosen. Ein weiteres bevorzugtes Material für die Barriereschicht ist Zellglas, ein auch unter dem Namen Zellulosehydrat bzw. Zellophan bekanntes Material.

Die bevorzugten Materialien für die Trägerschichten der Barrierematerialschicht der vorliegenden Erfindung weisen bereits eine gewisse Barriereeignung insbesondere gegenüber Flüssigkeiten auf. Diese Barriereträgerschichten weisen typischerweise eine Dicke von etwa 10 bis 100 µm auf, bevorzugt 12 bis 50 µm, insbesondere bevorzugt 15 bis 40 µm, wie beispielsweise etwa 25 µm.

Um die gewünschte Barriereeigenschaft allerdings sicherzustellen, ist es notwendig die vorstehend definierte Trägerschicht mit einer Schicht aus Barrierematerial zu versehen. Erfindungsgemäß werden dabei insbesondere aufgedampfte Barrierematerialien eingesetzt, da so mit einer sehr dünnen Schicht (wenige Angström) eine gewünschte Barrierewirkung, insbesondere gegenüber Sauerstoff, CO₂ aber auch Wasserdampf, sichergestellt werden kann. Erfindungsgemäß geeignete Barrierematerialien sind aufgedampfte Schichten aus (Halb)Metalloxiden oder (Halb)Metallen, beispielsweise Aluminium, SiO₂, Al₂O₃, oder anderen Oxiden und Mischoxiden oder Mischungen. Bevorzugt sind dabei die Oxidmaterialien, da somit insgesamt auf den Einsatz einer Metallschicht verzichtet werden kann.

Die aufgedampfte Schicht aus dem Barrierematerial wird bevorzugt auf einer Seite der Trägerschicht aufgebracht, es ist allerdings auch möglich diese aufgedampfte Barriere auf beiden Seiten der Trägerschicht aufzubringen. Bevorzugt wird die Barriere, wie vorstehend definiert, umfassend die Trägerschicht und die aufgedampfte Schicht aus Barrierematerial so im erfindungsgemäßen Verbundsystem angeordnet, dass die aufgedampfte Barriere auf der der Papierschicht abgewandten Seite der Trägerschicht vorliegt. Allerdings sind auch andere Ausgestaltungen möglich. Häufig wird, aufgrund von Überlegungen im Hinblick auf das Herstellungsverfahren (also Reihenfolge der Aufbringung/Einbringung der einzelnen Schichten des Verbundsystems) eine Anordnung gewählt, die sicherstellt, dass das Barrierematerial möglichst schnell durch eine weitere Schicht bedeckt wird, um diese relativ empfindliche Schicht vor Beschädigungen im weiteren Herstellungsprozess zu schützen.

Erfindungsgemäß bevorzugt ist es wenn die vorstehend definierte Barrierematerialschicht auf die eingangs beschriebene Papierschicht aufgebracht wird. Dabei können übliche die Haftung verbessernde Schichten dazwischen aufgebracht werden, die typischerweise eine Dicke von weniger als 20 µm aufweisen, insbesondere bevorzugt ist eine Dicke von 1 bis 10 µm, insbesondere bevorzugt 2 bis 5 µm. Geeignete Materialien und Aufbringungsarten für derartige Schichten sind dem Fachmann bekannt und geeignete Beispiele sind Kleberdschichten (Extrusionskleber, Kaschierkleber, etc). Auch hier ist es erneut bevorzugt, wenn die Materialien für derartige Kleberschichten biologisch abbaubar sind und/oder auf nachwachsenden Rohstoffen basieren.

Die für die Trägerschicht vorstehend genannten bevorzugten Materialien wie Milchsäurematerialien und Zellglas ermöglichen weiterhin aufgrund ihrer bei der Filmherstellung erhaltenen glatten Oberfläche die Aufdampfung sehr dünner Schichten aus Barrierematerial, da hier kein großer Ausgleich für eine raue Oberfläche der Trägerschicht geschaffen werden muss. Gleichzeitig haften die vorstehend beschriebenen Barrierematerialien gut auf der Trägerschicht, so dass eine sichere Fertigung der die Trägerschicht und die aufgedampfte Schicht aus Barrierematerialien umfassende Barriereschicht sichergestellt ist.

Auch diese Barriereschicht trägt, neben ihrer Barrierewirkung, zur mechanischen Festigkeit, aber auch zum UV-Schutz bei. Durch die Verwendung von Füllstoffen und Additiven können diese Eigenschaften weiter modifiziert und optimiert werden, wobei übliche, dem Fachmann bekannte Materialien beispielsweise als UV-Absorber oder Füllstoffe zur Erhöhung der Steifigkeit zum Einsatz kommen.

Eine weitere Option einer Barriereschicht ist eine entsprechend ausgestaltete Siegelschicht, die nachfolgend beschrieben wird.

### Siegelschicht:

Weiterhin umfasst das Verbundsystem in Übereinstimmung mit der vorliegenden Erfindung eine Siegelschicht, die auf einer Seite der vorstehend beschriebenen Barrierematerialschicht aufgebracht wird. Diese Siegelschicht ist so angeordnet, dass sie die am weitesten innen liegende der wesentlichen Schichten des Verbundsystems ist, d. h. die Siegelschicht ist typischerweise direkt die Innenschicht einer fertigen Lebensmittelverpackung. Auch die Siegelschicht in Übereinstimmung mit der vorliegenden Erfindung wird bevorzugt aus biologisch abbaubaren oder bevorzugt sogar kompostierbaren Materialien und/oder aus auf nachwachsenden Rohstoffen basierenden Materialien hergestellt.

Bevorzugt sind insbesondere polymere Materialien auf der Basis von Polyestern, beispielsweise die bereits vorstehend beschriebenen Polymilchsäurematerialien, aber auch PBAT (Polybutylenadipat-terephthalat) und weitere, ähnliche Materialien. Geeignet ist beispielsweise ein kommerziell von der BASF unter der Bezeichnung Ecoflex ® erhältliches Material.

Die Siegelschicht weist bevorzugt eine Dicke von etwa 10 bis 200 µm auf, bevorzugt 20 bis 150 µm, insbesondere bevorzugt 100 bis 50 µm, wie beispielsweise etwa 90, 75 oder 60 µm.

Auch die Siegelschicht kann erneut mit Additiven und Füllstoffen, wie vorstehend für die anderen Schichten beschrieben, versehen sein. Erneut lassen sich darüber die Eigenschaften des Verbundsystems modifizieren und optimieren.

Um diese Siegelschicht sicher auf der vorstehend beschriebenen Barriereschicht aufzubringen, kann wiederum eine die Haftung verbessernde Schicht verwendet werden, die wie bereits vorstehend beschrieben ausgestaltet ist. Zur weiteren Verbesserung der Haftung können auch zusätzliche Techniken zur Verbesserung der Haftung der einzelnen Schichten zum Einsatz kommen, wie Oberflächenbehandlungen durch Flämmverfahren oder Coronaentladung etc.

Weiterhin kann die vorstehend beschriebene Siegelschicht ebenfalls mit Barrierematerialien beschichtet, vorzugsweise bedampft sein. Dabei können die bereits vorstehend beschriebenen Materialien zum Einsatz kommen, insbesondere bevorzugt sind hierbei erneut oxidische Beschichtungen, insbesondere SiOₓ, AlOₓ, Mischungen daraus und weitere Oxide. Derartige Barrieren können erneut auf einer oder auf beider Oberflächen der Siegelschicht aufgebracht werden, wobei insbesondere auch aus Kostengründen die Aufbringung auf einer Oberfläche meist ausreichend ist. Umfasst die hier beschriebene Siegelschicht eine derartige Barriereschicht ist es in Ausführungsformen der vorliegenden Erfindung möglich auf die vorstehend beschriebene Barrierematerialschicht zu verzichten, da in dieser Ausgestaltung dann die Siegelschicht die Barrierewirkung übernimmt, so dass ein Schichtaufbau mit einer Papierschicht und einer darauf vorgesehenen Siegelschicht möglich ist, wobei immer noch ausreichende Barriereeigenschaften und mechanische Eigenschaften des Gesamtverbundsystems erreicht werden. Durch den Einsatz der vorstehend beschriebenen Polyestermaterialien wird erneut sicher gestellt, dass die Verbundsysteme der vorliegenden Erfindung im Wesentlichen aus Materialien bestehen, die zumindest biologisch abbaubar bzw. bevorzugt kompostierbar sind.

Eine weitere Option einer Barriereschicht ist eine Lackschicht, die nachfolgend beschrieben ist

### Lackschicht

Eine weitere Option für eine Barriereschicht ist eine Lackschicht, die beispielsweise auf der Papierschicht aufgebracht werden kann. Geeignete Beispiele von Lackschichten sind Nitrocellulose basierende Lacke. Diese können beispielsweise als Feuchtigkeitsbarriere dienen. Geeignete Aufbringungsarten, Schichtdicken und Materialien für derartige Schichten sind dem Fachmann bekannt.

Die hier beschriebenen Optionen für Barriereschichten können einzeln aber auch in Kombination im erfindungsgemäßen Verbundsystem eingesetzt werden, in Abhängigkeit vom gewünschten Einsatzzweck. Die Anzahl dieser Schichten kann frei gewählt werden und es können beispielsweise eine, zwei oder drei Barriereschichten vorliegen, die gleich oder verschieden sein können.

Insgesamt stellt die vorliegende Erfindung also ein verbessertes Verbundsystem zur Verfügung, geeignet zur Herstellung von Lebensmittelverpackungen, insbesondere Standbeuteln, wobei auf den Einsatz von Metallfolien ohne nachteiligen Einfluss auf die Barriereeigenschaften und mechanischen Eigenschaften verzichtet werden kann und im wesentlichen auf nachwachsenden Rohstoffen basierende und/oder biologisch abbaubare Polymermaterialien zum Einsatz kommen.

Neben den oben beschriebenen wesentlichen Schichten und den optionalen die Haftung verbessernden Schichten kann das Verbundsystem der vorliegenden Erfindung noch zusätzliche Schichten umfassen, wie beispielsweise einen Lack auf der Außenoberfläche der Papierschicht oder eine weitere Siegelschichten auf der Innen- und/oder Außenseite des Verbundsystems.

Exemplarische Verbundsysteme können also wie folgt aufgebaut sein (von Aussen nach Innen, bezogen auf eine Lebensmittelverpackung):
Lack/Papierschicht/Kleber/Barrierematerialschicht/Kleber/Siegelschicht
Lack/Papierschicht/Kleber/Barrierematerialschicht/Kleber/Siegelschicht mit Barrierematerial
Lack/Papierschicht/Kleber/Siegelschicht mit Barrierematerial
Papierschicht/Kleber/Barrierematerialschicht/Kleber/Siegelschicht
Lack/Papierschicht/Barrierematerialschicht/Siegelschicht

Die vorliegende Erfindung ist aber nicht auf diese exemplarischen Ausgestaltungen beschränkt.

Das Verbundsystem in Übereinstimmung mit der vorliegenden Erfindung ist insbesondere geeignet zur Herstellung von Lebensmittelverpackungen, insbesondere für flüssige oder halbflüssige Lebensmittel, bevorzugt Getränke, insbesondere Fruchtsäfte und andere fruchthaltige Getränke. Insbesondere erlaubt es das erfindungsgemäße Verbundsystem einen Standbeutel durch konventionelle Herstellungsverfahren herzustellen, so dass Lebensmittelverpackungen bereit gestellt werden können, die im Wesentlichen auf biologisch abbaubaren Rohstoffen basieren und zur Entsorgung beispielsweise kompostiert werden können.

## Patentansprüche

1. Verbundsystem, geeignet zur Herstellung von Lebensmittelverpackungen, umfassend eine Papierschicht sowie eine Barriereschicht, **dadurch gekennzeichnet, dass** das Laminat keine Metallfolie umfasst und weiter **dadurch gekennzeichnet, dass** die Barriereschicht ein biologisch abbaubares Material umfasst.

2. Verbundsystem nach Anspruch 1, **dadurch gekennzeichnet, dass** weiterhin eine Siegelschicht vorliegt.

3. Verbundsystem nach Anspruch 1 oder 2, **dadurch gekennzeichnet, dass** die Barriereschicht auf der Papierschicht aufgebracht ist und die Siegelschicht auf der gegenüberliegenden Oberfläche der Barriereschicht aufgebracht ist.

4. Verbundsystem nach einem der Ansprüche 1 bis 3, **dadurch gekennzeichnet, dass** die Papierschicht aus Transparentpapier besteht.

5. Verbundsystem nach einem der vorstehenden Ansprüche, **dadurch gekennzeichnet, dass** die Barriereschicht eine Trägerschicht sowie eine aufgedampfte Barrierematerialschicht umfasst, wobei bevorzugt die Trägerschicht aus Polymilchsäurematerialien oder Zellglas besteht und die Barrierematerialschicht aus aufgedampften (Halb)Metalloxiden besteht.

6. Verbundsystem nach einem der vorstehenden Ansprüche, **dadurch gekennzeichnet, dass** die Papierschicht eine Dicke von 10 bis 100 µm aufweist.

7. Verbundsystem nach einem der vorstehenden Ansprüche, **dadurch gekennzeichnet, dass** die Siegelschicht eine aufgedampfte Barrierematerialschicht umfasst.

8. Verbundsystem nach einem der vorstehenden Ansprüche, **dadurch gekennzeichnet, dass** zwischen der Paperschicht und der Barriereschicht und /oder zwischen der Barriereschicht und der Siegelschicht eine die Haftung verbessernde Schicht vorgesehen ist.

9. Verbundsystem nach einem der vorstehenden Ansprüche, **dadurch gekennzeichnet, dass** eine, zwei oder drei Barriereschichten vorliegen.

10. Verbundsystem nach einem der vorstehenden Ansprüche, **dadurch gekennzeichnet, dass** kompostierbare Materialien enthalten sind, bevorzugt dass das Verbundsystem kompostierbar ist.

11. Lebensmittelverpackung, umfassend das Laminat nach einem der Ansprüche 1 bis 8.

12. Lebensmittelverpackung nach Anspruch 9, **dadurch gekennzeichnet, dass** es sich dabei um einen Standbeutel handelt.
